# EUROPÄISCHE PATENTSCHRIFT

(11) **EP 1 562 791 B1**
(45) Veröffentlichungstag und Bekanntmachung des Hinweises auf die Patenterteilung: **14.06.2006**
(21) Anmeldenummer: 03770897.1
(22) Anmeldetag: 06.10.2003
(51) Int. Cl.: B60R 21/01, G01G 7/02, G01G 19/414

(54) **KRAFTMESSER, INSBESONDERE ZUR SITZGEWICHTSBESTIMMUNG IN EINEM KRAFTFAHRZEUG**
DYNAMOMETER, PARTICULARLY FOR DETERMINING THE SEATING WEIGHT IN A MOTOR VEHICLE
DYNAMOMETRE NOTAMMENT DESTINE A LA DETERMINATION DU POIDS D'UN SIEGE D'UN VEHICULE AUTOMOBILE

(30) Priorität: 11.11.2002 DE 10252224
(43) Veröffentlichungstag der Anmeldung: 17.08.2005
(73) Patentinhaber: ROBERT BOSCH GMBH, 70442 Stuttgart (DE)
(72) Erfinder: DUKART, Anton, 70839 Gerlingen (DE)
(86) Internationale Anmeldenummer: PCT/DE2003/003302
(87) Internationale Veröffentlichungsnummer: WO 2004/043746

(56) Entgegenhaltungen:
- WO-A-00/16054
- DE-A- 10 216 723
- US-A- 5 739 757
- US-A- 6 129 168

## Beschreibung

### Stand der Technik

Die Erfindung betrifft einen Kraftmesser, insbesondere zur Sitzgewichtsbestimmung in einem Kraftfahrzeug des Anspruchs 1.

Bei einem aus der nicht vorveröffentlichten DE 102 16 723 A1 bekannten Kraftmesser dieser Art taucht die Meßanordnung mit ihrem Magneten in eine als Loch ausgebildete Öffnung des Aufnahmeelements hinein. Da der Abstand des Magneten zu dem ferromagnetischen Material nach allen Seiten somit gleich groß ist, werden auch Kräfte, welche senkrecht zur Ebene des Sitzgewichtes in das Aufnahmeelement eingeleitet werden, von der Meßanordnung erfasst. Derartige Kräfte entstehen typischerweise durch Beschleunigungen oder Verzögerungen des Kraftfahrzeuges. Wünschenswert ist es dagegen, ausschließlich in der Ebene des Sitzgewichtes in das Aufnahmeelement eingeleitete Kräfte zu erfassen.

Ferner ist es aus der WO 00/16054 bekannt, das Aufnahmeelement formschlüssig bezüglich horizontal in den Sitz eingeleiteter Kräfte in dem Sitzgestell zu lagern, so dass das Aufnahmeelement nur in Richtung des Sitzgewichtes verformt wird. Diese mechanische Verhinderung von Querverformungen des Aufnahmeelements erfordert jedoch eine spezielle Geometrie bezüglich des Aufnahmeelement und dessen Lagerung im Sitzgestell.

US-A-6 129 168 zeigt die Merkmale des Oberbegriffs des Anspruchs 1.

### Vorteile der Erfindung

Der erfindungsgemäße Kraftmesser, insbesondere zur Sitzgewichtsbestimmung in einem Kraftfahrzeug mit den kennzeichnenden Merkmalen des Anspruchs 1 hat demgegenüber den Vorteil, dass etwaige Verformungen des Aufnahmeelements in horizontaler Richtung, das heißt senkrecht zum Sitzgewicht, zu keiner wesentlichen Veränderung des von der Meßanordnung erfassten Magnetfeldes des Magneten führen und somit nicht erfasst werden, wobei das Aufnahmeelement und dessen Aufnahme in der Sitzschiene relativ einfach ausgebildet sind. Dies wird durch die Anordnung des Magneten in einer länglichen Ausnehmung bewirkt, wobei sich die Längsachse der länglichen Ausnehmung senkrecht zur Richtung der angreifenden Sitzgewichtskraft ertreckt. Dadurch wird bei einer Verformung des Aufnahmeelements senkrecht zum Sitzgewicht der Magnet parallel in der Ausnehmung ausgelenkt, ohne dass sich dadurch sein Abstand zu ferromagnetischem Material ändert, was ansonsten zu einer Änderung des Magnetfeldes führen würde. Eine Auslenkung des Magneten senkrecht zur Längsachse der Ausnehmung infolge des Sitzgewichtes führt hingegen unmittelbar zu einer Abstandsänderung zu dem ferromagnetischen Material und somit zu einer Änderung des Magnetfeldes, welche erfasst wird.

Vorteilhafte Weiterbildungen des erfindungsgemäßen Kraftmessers, insbesondere zur Sitzgewichtsbestimmung in einem Kraftfahrzeug, sind in den Unteransprüchen angegeben.

In einer bevorzugten Ausführungsform der Erfindung ist die längliche Ausnehmung als Schlitz ausgebildet, wodurch sich die Ausnehmung besonders einfach herstellen lässt.

In einer weiteren bevorzugten Ausführungsform der Erfindung ist zwischen dem Aufnahmeelement und dem diesen umgebenden Lagerelement ein derartiger Abstand gewählt, dass die Verformung des Aufnahmeelements begrenzt ist, um einerseits das Aufnahmeelement vor Überlastung zu schützen und andererseits im Falle eines Bruches des Aufnahmeelements eine Befestigung des Sitzes an der Sitzschiene sicherzustellen.

Ferner läßt sich durch eine spezielle Anordnung der Pole des Magneten in der Ausnehmung die Empfindlichkeit der Meßanordnung bezüglich der Sitzkräfte erhöhen.

### Zeichnung

Ausführungsbeispiele der Erfindung sind in der Zeichnung dargestellt und werden nachfolgend näher erläutert. Es zeigen:
Figur 1 einen ersten erfindungsgemäßen Kraftmesser in einem vereinfachten Längsschnitt,
Figur 2 einen zweiten, modifizierten Kraftmesser ebenfalls im Längsschnitt und
Figur 3 einen Teil eines dritten Kraftmessers in einem Länsschnitt.

### Beschreibung der Ausführungsbeispiele

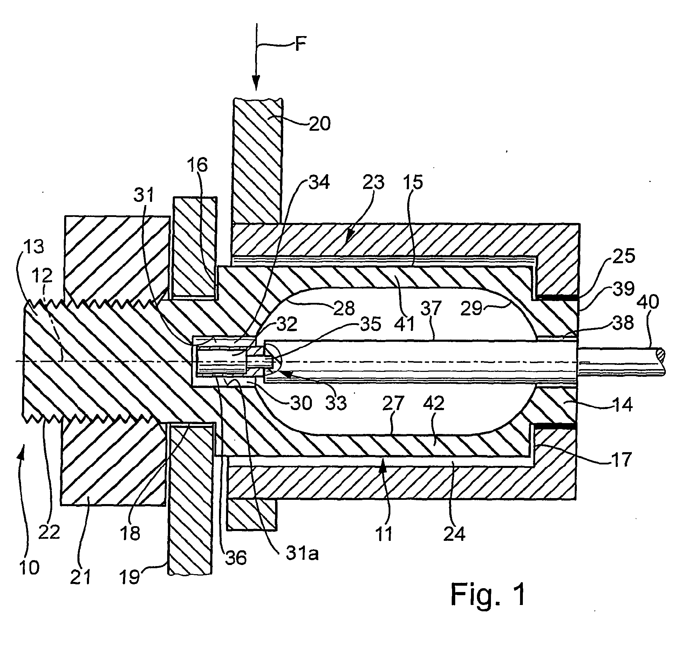

Der in der Figur 1 dargestellte erste Kraftmesser 10 dient der Sitzgewichtsbestimmung in einem Kraftfahrzeug. Eine derartige Sitzgewichtsbestimmung ist bei modernen Kraftfahrzeugen erforderlich, um beispielsweise den zeitlichen Gurtkraftverlauf sowie die Airbagauslösung bei einem Unfall bedarfsgerecht steuern zu können.

Der Kraftmesser 10 hat ein Aufnahmeelement 11 mit einer Längsachse 12. Das aus ferromagnetischem Material bestehende Aufnahmeelement 11 weist auf seinen einander gegenüberliegenden Seiten jeweils einen rotationssymmetrischen Endabschnitt 13, 14, mit gegenüber einem mittleren Abschnitt 15 verringertem Durchmesser auf. Zwischen dem jeweiligen Endabschnitt 13, 14 und dem mittleren Abschnitt 15 ist jeweils ein Bund 16, 17 ausgebildet, welcher als Anschlag in Richtung der Längsachse 12 dient.

Das Aufnahmeelement 11 ist mit seinem einen Endabschnitt 13 in ein Loch 18 einer Sitzschiene 19 einführbar, welche als ortsfestes Lager dient. Das Aufnahmeelement 11 läßt sich mittels einer Mutter 21, welche mit einem Gewinde 22 am Endabschnitt 13 zusammenwirkt, starr an der Sitzschiene 19 fixieren. Auf den anderen Endabschnitt 14 des Aufnahmeelements 11 ist ein starrer, topfförmiger Lagerkörper 23 überschieb- und fixierbar, welcher mit einer Schwinge 20 verbunden ist, die wiederum Bestandteil eines nicht dargestellten Sitzes des Kraftfahrzeuges ist. Dabei besteht zwischen dem Lagerkörper 23 und dem Aufnahmeelement 11 nur eine Verbindung im Bereich des Endabschnitts 14, beispielsweise mittels einer umlaufenden Schweißnahtverbindung 25, während zwischen dem Lagerkörper 23 und dem mittleren Abschnitt 15 des Aufnahmeelements 11 stets ein Spalt 24 ausgebildet ist.

Eine zu messende Sitzkraft F wird somit über die Schwinge 20 und den Lagerkörper 23 in den Endabschnitt 14 des Aufnahmeelements 11 übertragen, wobei sich dieses aufgrund der einseitigen Lagerung in der Schiene 19 elastisch verformt.

Die Größe der Verformung des Aufnahmeelements 11 infolge der Kraft F ist in abhängig vom Abstand der zwischen der Schiene 19 und der Befestigung des Lagerkörpers 23 an dem Aufnahmeelement 11 im Bereich der Schweißnahtverbindung 25, wobei die Sitzkraft F als Biegekraft auf das Aufnahmeelement 11 einwirkt.

Im Aufnahmeelement 11 ist eine erste Ausnehmung in Form eines Durchbruches 27 ausgebildet, der sich in etwa im mittleren Abschnitt 15 befindet. Der Durchbruch 27 ist insbesondere durch Fräsen erzeugt und weist zur Verminderung von Kerbwirkungen bei einer Belastung durch die Kraft F im Bereich der den Endabschnitten 13, 14 zugewandten Seiten gerundete Innenwände 28, 29 auf. Vom Grund der der Sitzschiene 19 zugewandten Innenwand 28 geht eine zweite Ausnehmung aus. Die zweite Ausnehmung hat eine längliche Form, derart, dass sich deren Längsachse senkrecht zur Zeichenebene der Figur 1 erstreckt. Bevorzugt ist die zweite Ausnehmung als durchgehender Schlitz 30 ausgebildet, dessen Haupterstreckungsrichtung senkrecht zur Zeichenebene der Figur 1 verläuft.

In den Schlitz 30 ragt zumindest der Permanentmagnet 32 einer Sensoranordnung 33 mit geringem Spalt 34 zur oberen und unteren Wand 31, 31a des Schlitzes 30 hinein. Die Sensoranordnung 33 umfaßt neben dem Permanentmagneten 32 noch einen magnetfeldempfindlichen Sensor 35, der vorzugsweise als Hall-IC ausgebildet ist. Der Permanentmagnet 32 und der Sensor 35 sind ortsfest zueinander auf einem Träger 36 angeordnet, wobei die Polachse des Permanentmagneten 32 bevorzugt senkrecht zur Längsachse 12 des Aufnahmeelements 11, das heißt fluchtend zur Sitzkraft F verläuft. Der Träger 36 ist an einer Steckhülse 37 befestigt, welche ihrerseits durch ein Durchgangsloch 38 an der Stirnseite 39 des Aufnahmeelements 11 ragt, und dort mit dem Aufnahmeelement 11 starr gekoppelt ist. Durch die Ausbildung als Steckhülse 37 ist die elektrische Kontaktierung der Sensoranordnung 33 mittels eines Kabels 40 durch die Innenwandung der Steckhülse 37 möglich.

Durch die beschriebene Ausbildung des Aufnahmeelements 11 mit seinem Durchbruch 27 sind parallel zur Längsachse 12 zwei in der Zeichenebene der Figur 1 relativ schmale, und senkrecht zur Zeichenebene der Figur relativ breite Verbindungsstege 41, 42 ausgebildet, so dass sich das Aufnahmeelement 11 bei einer Einleitung der Kraft F in Form eines Doppelbiegebalkens verformt. Dies hat den Vorteil, dass Kräfte F aufgrund einer reinen Sitzkraft eine relativ starke Verformung bzw. Auslenkung des Aufnahmeelements 11 verursachen. Demgegenüber verursachen Kräfte, die senkrecht zur Zeichenebene der Figur 1 in das Aufnahmeelement 11 eingeleitet werden (bsw. Beschleunigungs- oder Verzögerungskräfte des Kraftfahrzeuges) aufgrund der senkrecht zur Zeichenebene der Figur 1 relativ breiten Verbindungsstege 41, 42 nur eine relativ geringe Verformung des Aufnahmeelements 11.

Wesentlich ist, dass die Steckhülse 37 an der Verformung des Lagerkörpers 11 nicht teilnimmt. Vielmehr wird die Steckhülse 37 aus ihrer Ruhelage aus der Längsachse 12 herausbewegt. Bei einer Kraft F, die wie eingezeichnet senkrecht zur Erstreckungsrichtung des Spaltes 30 verläuft, ändert sich somit der Spalt 34 des Permanentmagneten 32 zu den Wänden 31, 31a des Schlitzes 30. Aufgrund der Änderung des Spaltes 34 nimmt die Feldstärke der Magnetfeldlinien des Permanentmagneten 32 in Richtung des geringeren Spaltes 34 zu und in Richtung des größeren Spaltes 34 ab. Diese Änderungen der Feldstärken werden von dem Sensor 35 erfaßt und mittels einer Auswerteschaltung in ein Signal für eine entsprechende Sitzkraft F umgewandelt.

Demgegenüber bewirkt eine Kraft F, welche senkrecht zur Zeichenebene der Figur 1 in das Aufnahmeelement 11 eingeleitet wird lediglich eine Auslenkung des Permanentmagneten 32 senkrecht zur Zeichenebene der Figur 1, so dass sich der Abstand des Permanentmagenten 32 zu den Wänden 31, 31a und somit auch die Feldstärken nicht ändern.

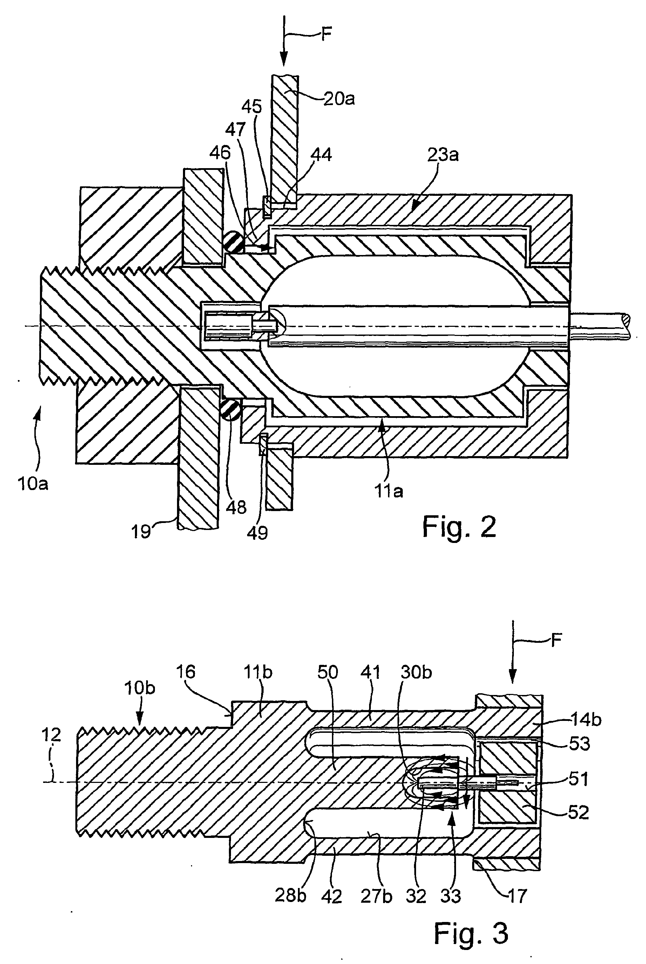

Bei dem in den Figur 2 dargestellten zweiten Ausführungsbeispiel der Erfindung weist der Kraftmesser 10a ein gegenüber dem Kraftmesser 10 modifiziertes Aufnahmeelement 11a und einen modifizierten Lagerkörper 23a auf. Man erkennt, dass die Schwinge 20a über einen Absatz 44 und mittels eines Sicherungsringes 45 mit dem Lagerkörper 23a verbunden ist. Ferner ist an dem Aufnahmeelement 11a auf der der Sitzschiene 19 zugewandten Seite eine Stufe 46 ausgebildet. Die Stufe 46 ist von einem radial nach innen ragenden, umlaufenden Abschnitt 47 des Lagerkörpers 23a umfasst, wobei zwischen dem Abschnitt 47 und der Sitzschiene 19 noch ein O-Ring 48 angeordnet ist. Zwischen dem Innenumfang des Abschnitts 47 und der Aufnahmeelement 11a ist ein definierter Radialspalt 49 ausgebildet. Bei einer Beaufschlagung des Aufnahmeelements 11a mit einer Kraft F, die größer ist als eine bestimmte zulässige Kraft (nach der der Radialspalt 49 ausgelegt ist), setzt der Abschnitt 47 auf dem Aufnahmeelement 11a mit seinem Innenumfang direkt auf und bewirkt, dass sich das Aufnahmeelement 11a nicht weiter verformt. Die Ausbildung des Lagerkörpers 23a mit seinem Abschnitt 47 bewirkt somit eine Überlastsicherung. Sollte ferner das Aufnahmeelement 11a außerhalb der Stufe 46 brechen, bewirkt die Ausbildung einen Formschluß zwischen dem Lagerkörper 23a und dem Aufnahmeelement 11a.

Bei dem in der Figur 3 dargestellten dritten Ausführungsbeispiel der Erfindung weist der Kraftmesser 10b ein Aufnahmeelement 11b auf. Dieses Aufnahmeelement 11b unterscheidet sich gegenüber dem Aufnahmeelement 11 im wesentlichen durch einen aus ferromagnetischem Material bestehenden stiftförmigen Fortsatz 50, der im Durchbruch 27b angeordnet ist. Dabei geht der Fortsatz 50, welcher beispielsweise einstückig am Aufnahmeelement 11b angeformt ist, von der Innenwand 28b auf der der Sitzschiene 19 zugewandten Seite aus. Der bei einer Beaufschlagung durch eine Kraft F an der Verformung des Aufnahmeelements 11b nicht teilnehmende Fortsatz 50 weist an seinem freien Ende die zweite Ausnehmung in Form des Schlitzes 30b auf. Dabei ragt der Fortsatz 50 bzw. der Schlitz 30b bis nahe an den einen Endabschnitt 14b heran, um bei einer Verformung des Aufnahmeelements 11b eine möglichst hohe Auslenkung zu erzielen. In den Schlitz 30b ragt der Permanentmagnet 32 der Sensoranordnung 33 hinein, welche in der Durchgangsbohrung 51 eines ringförmigen Trägers 52 angeordnet ist, wobei der Träger 52 seinerseits in eine Durchgangsbohrung 53 am Endabschnitt 14b eingesetzt ist. Ferner verläuft die Polachse des Permanetmagneten 32 in diesem Ausführungsbeispiel in der Längsachse 12.

Ergänzend wird erwähnt, dass die Querschnittfläche des Lagerkörpers 23, 23a sowie des Aufnahmeelements 11, 11a, 11b nicht nur kreisförmig, sondern auch beispielsweise quadratisch oder oval ausgebildet sein kann. Damit lassen auf einfache Weise unterschiedliche Überlastanschläge (entsprechend dem Kraftmesser 11a) sowie ggf. unterschiedliche Widerstandsmomente in den verschiedenen Belastungsrichtungen realisieren. Ferner ist es selbstverständlich möglich, Merkmale verschiedener Ausführungsbeispiels miteinander zu kombinieren. Die Erfindung ist somit nicht auf die einzenen dargestellten Ausführungsformen beschränkt, vielmehr sind auch Kominationen der beschriebenen Ausführungsformen denkbar.

## Patentansprüche

1. Kraftmesser (10; 10a; 10b), insbesondere zur Sitzgewichtsbestimmung in einem Kraftfahrzeug, mit einem Aufnahmeelement (11; 11a; 11b), welches zwei voneinander beabstandete Lagerstellen (16, 17) aufweist, mit einer Ausnehmung (27; 27a; 27b) im Aufnahmeelement (11; 11a; 11b) im Bereich zwischen den zwei Lagerstellen (16, 17), mit einem nicht von Biegekräften beauschlagten stabförmigen Element (37; 50), dessen freies Ende bei einer Beaufschlagung des Aufnahmeelements (11; 11a; 11b) mit einer zu messenden Kraft (F) ausgelenkt wird, und mit einer Meßanordnung (33) zur Erkennung der Auslenkung des freien Endes des stabförmigen Elements (37; 50), wobei die Meßanordnung (33) einen Magneten (32) und einen magentfeldempfindlichen Sensor (35) umfaßt, wobei der Magnet (32) und der magnetfeldempfindliche Sensor (35) ortsfest zueinander angeordnet sind, und wobei der Magnet (32) nah beabstandet zu ferromagnetischem Material angeordnet ist, **dadurch gekennzeichnet, dass** der Magnet (32) innerhalb einer länglichen Ausnehmung (30; 30a; 30b) des ferromagnetischen Materials angeordnet ist und dass sich die Längsachse der Ausnehmung (30; 30a; 30b) quer zur Richtung der zu messenden Kraft (F) und zur Ertreckung des stabförmigen Elements (37; 50) erstreckt.

2. Kraftmesser nach Anspruch 1, **dadurch gekennzeichnet, dass** die längliche Ausnehmung als Schlitz (30; 30a; 30b) ausgebildet ist.

3. Kraftmesser nach Anspruch 1 oder 2, **dadurch gekennzeichnet, dass** die Ausnehmung (30b) in einem Fortsatz (50) ausgebildet ist, der in die Ausnehmung (27b) hineinragt.

4. Kraftmesser nach Anspruch 1 oder 2, **dadurch gekennzeichnet, dass** die Ausnehmung (30a; 30b) vom Grund der ersten Ausnehmung (27; 27a) im Aufnahmeelement (11; 11a) ausgeht.

5. Kraftmesser nach einem der Ansprüche 1 bis 4, **dadurch gekennzeichnet, dass** das Aufnahmeelement (11; 11a; 11b) als Doppelbiegebalken mit zwei parallel zueinander angeordneten, stabförmigen Balken (41, 42) ausgebildet ist und dass das stabförmige Element (37; 50) in der Längsachse (12) des Aufnahmeelements (11; 11a; 11b) angeordnet ist.

6. Kraftmesser nach einem der Ansprüche 1 bis 5, **dadurch gekennzeichnet, dass** das Aufnahmeelement (11; 11a; 11b) von einem topfförmigem Lagerelement (23; 23a) umgeben ist, welches mit der Schwinge (20; 20a) eines Sitzes gekoppelt ist, dass über das Lagerelement (23; 23a) die zu messende Kraft (F) eingeleitet wird, dass das Aufnahmeelement (11; 11a; 11b) einerseits mit einer Sitzschiene (19) als erster Lagerstelle und auf der gegenüberliegenden Seite mit dem Lagerelement (23; 23a) als zweiter Lagerstelle verbunden ist.

7. Kraftmesser nach Anspruch 6, **dadurch gekennzeichnet, dass** zwischen dem Lagerelement (23a) und dem Aufnahmeelement (11a) auf der der Sitzschiene (19) zugewandten Seite ein Spalt (49) ausgebildet ist, der beim Überschreiten einer bestimmten zulässigen Kraft (F) bewirkt, dass das Lagerelement (23a) auf dem Aufnahmelement (11a) aufsitzt und so einen Überlastanschlag ausbildet.

8. Kraftmesser nach Anspruch 6 oder 7, **dadurch gekennzeichnet, dass** das Lagerelement (23; 23a; 23b) eine runde, quadratische oder ovale Querschnittsfläche aufweist.

9. Kraftmesser nach einem der Ansprüche 6 bis 8, **dadurch gekennzeichnet, dass** das Lagerelement (23a) auf der der Sitzschiene (19) zugewandten Seite einen nach innen ragenden Lagerbund (47) hat, welcher einen Absatz (46) des Aufnahmeelements (11a) hintergreift.

10. Kraftmesser nach einem der Ansprüche 1 bis 9, **dadurch gekennzeichnet, dass** die Polachse des Magneten (32) parallel zur Richtung der zu messenden Kraft (F) verläuft.

## Claims

1. Force sensor (10; 10a; 10b), in particular for seat weight determination in a motor vehicle, having a recording element (11; 11a; 11b) which has two bearing points (16, 17) which are separated from one another, having a recess (27; 27a; 27b) in the recording element (11; 11a; 11b) in the area between the two bearing points (16, 17) with an element (37; 50) which is in the form of a rod, does not have bending forces applied to it and whose free end is deflected when a force (F) to be measured is applied to the recording element (11; 11a; 11b), and having a measurement arrangement (33) for identification of the deflection of the free end of the element (37; 50) which is in the form of a rod, with the measurement arrangement (33) comprising a magnet (32) and a sensor (35) which is subject to magnetic fields, with the magnet (32) and the sensor (35) which is sensitive to magnetic fields being arranged in a fixed position with respect to one another, and with the magnet (32) being arranged a short distance away from the ferromagnetic material, **characterized in that** the magnet (32) is arranged within an elongated recess (30; 30a; 30b) in the ferromagnetic material, and **in that** the longitudinal axis of the recess (30; 30a; 30b) extends transversely with respect to the direction of the force (F) to be measured and with respect to the extent of the element (37; 50) which is in the form of a rod.

2. Force sensor according to Claim 1, **characterized in that** the elongated recess is in the form of a slot (30; 30a; 30b).

3. Force sensor according to Claim 1 or 2, **characterized in that** the recess (30b) is in the form of a projection (50) which projects into the recess (27b).

4. Force sensor according to Claim 1 or 2, **characterized in that** the recess (30a; 30b) originates from the base of the first recess (27; 27a) in the recording element (11; 11a).

5. Force sensor according to one of Claims 1 to 4, **characterized in that** the recording element (11; 11a; 11b) is in the form of a double bending bar with two bars (41, 42) which are in the form of rods and are arranged parallel to one another, and **in that** the element (37; 50) which is in the form of a rod is arranged on the longitudinal axis (12) of the recording element (11; 11a; 11b).

6. Force sensor according to one of Claims 1 to 5, **characterized in that** the recording element (11; 11a; 11b) is surrounded by a bearing element (23; 23a) which is in the form of a pot and is coupled to the rocker (20; 20a) of a seat, **in that** the force (F) to be measured is introduced via the bearing element (23; 23a), **in that** the recording element (11; 11a; 11b) is connected on one side to a seat rail (19) as the first bearing point, and on the opposite side to the bearing element (23; 23a) as the second bearing point.

7. Force sensor according to Claim 6, **characterized in that** a gap (49) is formed between the bearing element (23a) and the recording element (11a) on the side facing the seat rail (19) and, when a specific maximum permissible force (F) is exceeded, this gap (49) results in the bearing element (23a) being seated on the recording element (11a), and thus forming an overload stop.

8. Force sensor according to Claim 6 or 7, **characterized in that** the bearing element (23; 23a; 23b) has a round, square or oval cross-sectional area.

9. Force sensor according to one of Claims 6 to 8, **characterized in that** the bearing element (23a) has a bearing collar (47) which projects inwards and engages behind a step (46) of the recording element (11a) on the side facing the seat rail (19).

10. Force sensor according to one of Claims 1 to 9, **characterized in that** the pole axis of the magnet (32) runs parallel to the direction of the force (F) to be measured.

## Revendications

1. Dynamomètre (10 ; 10a ; 10b), notamment destiné à la détermination du poids d'un siège dans un véhicule automobile, comprenant un élément de réception (11 ; 11a; 11b) qui présente deux points d'appui distants l'un de l'autre (16, 17), un évidement (27 ; 27a ; 27b) dans l'élément de réception (11; 11a; 11b) dans la région située entre les deux points d'appui (16, 17), un élément en forme de barre (37 ; 50) non soumis à des forces de flexion, dont l'extrémité libre est déviée avec une force à mesurer (F) lors d'une sollicitation de l'élément de réception (11 ; 11a ; 11b), et un dispositif de mesure (33) pour détecter la déviation de l'extrémité libre de l'élément en forme de barre (37 ; 50), dans lequel le dispositif de mesure (33) comprend un aimant (32) et un capteur sensible au champ magnétique (35), l'aimant (32) et le capteur sensible au champ magnétique (35) étant montés en position fixe l'un par rapport à l'autre, et dont l'aimant (32) est disposé à proximité d'une matière ferromagnétique,
**caractérisé en ce que**
l'aimant (32) est disposé à l'intérieur d'un évidement allongé (30 ; 30a ; 30b) de la matière ferromagnétique, et l'axe longitudinal de l'évidement (30 ; 30a ; 30b) s'étend transversalement à la direction de la force à mesurer (F) et à la direction de l'élément en forme de barre (37 ; 50).

2. Dynamomètre selon la revendication 1,
**caractérisé en ce que**
l'évidement allongé se présente sous la forme d'une fente (30 ; 30a ; 30b).

3. Dynamomètre selon la revendication 1 ou 2,
**caractérisé en ce que**
l'évidement (30b) est formé dans un prolongement (50) pénétrant dans l'évidement (27b).

4. Dynamomètre selon la revendication 1 ou 2,
**caractérisé en ce que**
l'évidement (30a ; 30b) part du fond du premier évidement (27 ; 27a) dans l'élément de réception (11 ; 11a).

5. Dynamomètre selon l'une quelconque des revendications 1 à 4,
**caractérisé en ce que**
l'élément de réception (11 ; 11a ; 11b) est réalisé en une double poutre de flexion avec deux poutres en forme de barre (41, 42) parallèles et l'élément en forme de barre (37 ; 50) est disposé dans l'axe longitudinal (12) de l'élément de réception (11 ; 11a ; 11b) .

6. Dynamomètre selon l'une quelconque des revendications 1 à 5,
**caractérisé en ce que**
l'élément de réception (11 ; 11a ; 11b) est entouré d'un élément d'appui (23 ; 23a) en forme de chapeau couplé à la partie oscillante (20 ; 20a) d'un siège, la force à mesurer (F) est introduite par l'élément d'appui (23 ; 23a), et l'élément de réception (11 ; 11a ; 11b) est relié sur un côté à un rail de siège (19) servant de premier point d'appui et sur le côté opposé à l'élément d'appui (23 ; 23a) servant de deuxième point d'appui.

7. Dynamomètre selon la revendication 6,
**caractérisé en ce qu'**
une fente (49) formée entre l'élément d'appui (23a) et l'élément de réception (11a) sur le côté tourné vers le rail de siège (19), fait en sorte qu'en cas de dépassement d'une force admissible déterminée (F), l'élément d'appui (23a) repose sur l'élément de réception (11a) et forme ainsi une butée de surcharge.

8. Dynamomètre selon la revendication 6 ou 7,
**caractérisé en ce que**
l'élément d'appui (23 ; 23a ; 23b) présente une section transversale ronde, carrée ou ovale.

9. Dynamomètre selon l'une quelconque des revendications 6 à 8,
**caractérisé en ce que**
l'élément d'appui (23a) comporte, sur le côté tourné vers le rail de siège (19), un collet de butée (47) s'étendant vers l'intérieur et qui accroche par l'arrière un épaulement (46) de l'élément de réception (11a).

10. Dynamomètre selon l'une quelconque des revendications 1 à 9,
**caractérisé en ce que**
l'axe polaire de l'aimant (32) est parallèle à la direction de la force à mesurer (F).
